# Europäisches Patentamt
## European Patent Office
## Office européen des brevets

(19)

(11) Veröffentlichungsnummer: **0 192 963**
**B1**

(12) # EUROPÄISCHE PATENTSCHRIFT

(45) Veröffentlichungstag der Patentschrift:
**20.07.88**

(51) Int. Cl.⁴: **G 01 M 13/02**

(21) Anmeldenummer: **86100866.2**

(22) Anmeldetag: **23.01.86**

(54) Schwingungsmesseinrichtung für ein Spiralkegelradgetriebe auf einer Zahnradprüfmaschine.

(30) Priorität: **27.02.85 CH 893/85**

(43) Veröffentlichungstag der Anmeldung:
**03.09.86 Patentblatt 86/36**

(45) Bekanntmachung des Hinweises auf die Patenterteilung:
**20.07.88 Patentblatt 88/29**

(84) Benannte Vertragsstaaten:
**CH DE FR GB IT LI SE**

(56) Entgegenhaltungen:
**US-A-4 252 023**
**US-A-4 335 612**

**PATENTS ABSTRACTS OF JAPAN, Band 8, Nr. 31 (P-253) 1468 , 9. Februar 1984, Seite 124 P 253; & JP - A - 58 186 027**

(73) Patentinhaber: **Werkzeugmaschinenfabrik Oerlikon-Bührle AG, Birchstrasse 155, CH- 8050 Zürich (CH)**

(72) Erfinder: **Konersmann, Erhard, Dipl.- Ing., Grundackerstrasse 3, CH- 8304 Wallisellen (CH)**

EP 0 192 963 B1

## Beschreibung

Die Erfindung bezieht sich auf eine Schwingungsmesseinrichtung für ein Spiralkegelradgetriebe auf einer Zahnradprüfmaschine, auf welcher die Zahnräder an je einem Spindelstock bzw. der zugeordneten Spindel aufgespannt sind, enthaltend einen Schwingungsaufnehmer und Auswertegeräte zur Qualitätsbeurteilung des Zahnradsatzes.

Messeinrichtungen zum Messen mechanischer Schwingungen und Stösse dienen auch zur Qualitätsbeurteilung eines Zahnradgetriebes, insbesondere des Laufgeräusches. Beispielsweise werden Beschleunigungsaufnehmer, auch Schwingungsaufnehmer, Körperschallmikrofone, elektromechanische Wandler oder piezoelektrische Wandler genannt, am schwingenden Objekt befestigt und über flexible Kabel mit einer elektrischen Messapparatur verbunden, welche eine Frequenzanalyse mit Auflösung von Schall- und Schwingungs-Signalen, beispielsweise zum Vergleich mit einer Bildmaske, liefert.

Es ist eine Zahnradprüfmaschine zum Prüfen des Laufgeräusches in Abhängigkeit von Belastung, Drehzahl und Einbaudistanz gemäss CH-568 561 bzw. DE-24 34 209 B2 bekannt, bei der die Spindeln hydrostatisch gelagert und die Druckänderungen in den Öltaschen als Flüssigkeitsschallsignale gemessen werden. Bei den Radiallagern werden zwei einander gegenüberliegende Druckoeltaschen, normalerweise die Vertikal angeordneten Taschen, auf die das angreifende Drehmoment wirkt, als Meßstellen verwendet. Ferner ist gemäss Einleitung der genannten Patentschrift bekannt, zur Beurteilung der Laufruhe der Zahnräder eine Körperschallmessung mit Hilfe von piezoelektrischen Wandlern durchzuführen.

Bei diesen Meßsystemen sind die Signalaufnehmer ortsfest eingebaut und nur die vertikale Komponente der Zahneingriffskraft dient der Messung. Diese vertikale Komponente ist aber abhängig von der Kegelradsatzgeometrie, z. B. vom Spiralwinkel, der bis zu 55° betragen kann, und von der Achsversetzung bei Hypoidgetrieben. Daraus ergibt sich, dass bei Abweichungen von Spiralwinkel 0° und bei Achsversetzung, die in einer festen Richtung durchgeführte Schwingungmessung nur ein Teilsignal auswerten kann.

Die Erfindung, wie sie im Anspruch 1 gekennzeichnet ist, löst die Aufgabe, eine Schwingungsmesseinrichtung zu schaffen, bei der unabhängig von der jeweiligen Zahnradsatzauslegung möglichst die maximale Schwingungskomponente auf den Schwingungsaufnehmer einwirkt.

Die durch die Erfindung erreichten Vorteile sind im wesentlichen darin zu sehen, dass durch das Drehen des Messringes, mit dem darauf befestigten Schwingungsaufnehmer mit radialer Messrichtung, die maximale Schwingungskomponente in radialer Richtung für jede Zahnradsatzauslegung auf einfache Weise eingestellt und fixiert werden kann, dass der Störpegeleinfluss verringert wird und dass diese Messring-Anordnung ritzel- und tellerradseitig einsetzbar ist.

Im folgenden wird die Erfindung anhand einer lediglich einen Ausführungsweg darstellenden Zeichnung näher erläutert. Es zeigt:

Fig. 1 einen Teil eines Spindelstockes mit aufgespanntem Tellerrad im Schnitt,

Fig. 2 ein Verspannelement vergrössert im Schnitt und

Fig. 3 schematisch die Abhängigkeit von Eingriffstellung, Eingriffskraft und Schwingungsaufnehmerstellung.

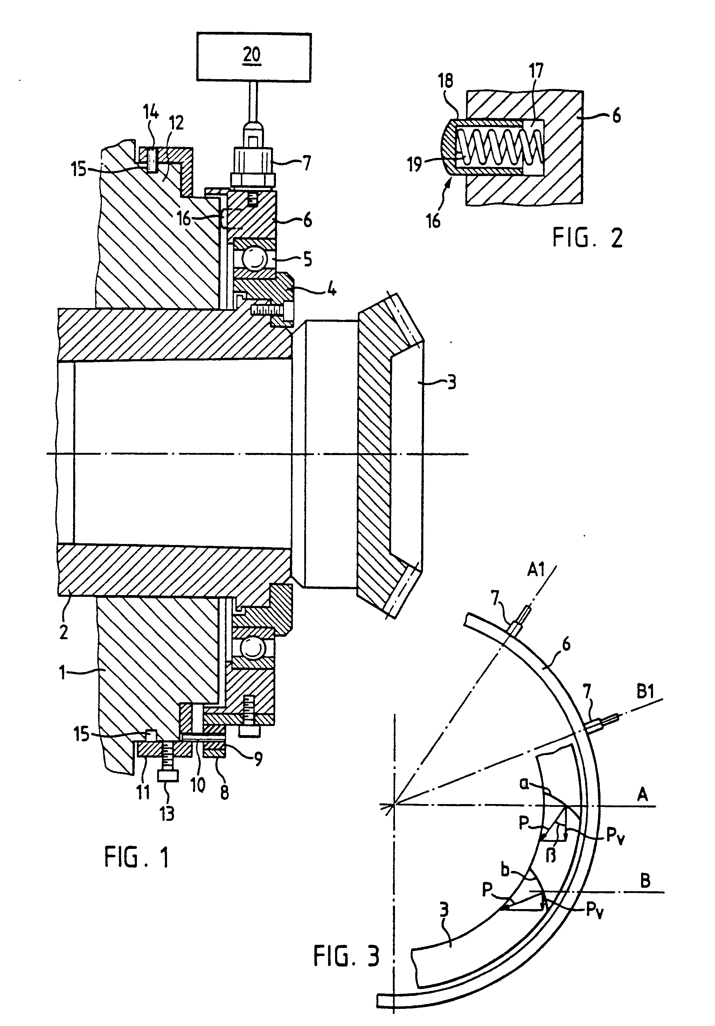

In Fig. 1 ist nur der erfindungsgemässe Teil einer an sich bekannten und hier nicht näher ersichtlichen und erläuterten Schwingungsmesseinrichtung dargestellt. In einem Spindelstock 1 einer Zahnradprüfmaschine ist in bekannter Weise ein Tellerrad 3 auf einer Spindel 2 aufgespannt. Am Ende der Spindel 2 ist ein Lagerring 4 spielfrei befestigt, und ebenfalls spielfrei darauf aufgezogen ist ein Kugellager 5, dessen Aussenring spielfrei von einem Messring 6 umfasst ist. Radial am Messring befestigt sind ein Schwingungsaufnehmer 7, z. B. ein piezoelektrischer Wandler, und ein Mitnehmer 8, welcher eine Buchse 9 aus elastischem Material und darin verankert einen Mitnahmestift aufweist. Ein Justierrring 11, auf dessen Stirnseite der Mitnahmestift 10 in eine Bohrung eingreift, ist an einem Flansch 12 des Spindelstockes 1 verdrehbar und mit einer oder mehreren am Umfang verteilten Schrauben 13 fixierbar angeordnet. Die Führung wird dabei durch am Umfang des Justierringes 11 angebrachte Stifte 14, welche in eine Nut 15 am Flansch 12 eingreifen, gewährleistet. Der Schwingungsaufnehmer 7 ist über ein flexibles Kabel mit an sich bekannten Auswertegeräten 20 verbunden.

Zum spielfreien Verspannen des Kugellagers 5 sind stirnseitig gegen den Spindelstock 1 am Umfang des Messringes 6 Verspannelemente 16 vorgesehen, welche gemäss Fig. 2 beispielsweise aus einer Bohrung 17 im Messring 6, einer darin axial verschiebbar angeordneten und mit einem Boden versehenen Hülse 18 und einer innerhalb der Hülse und der Bohrung 17 angeordneten Feder 19 bestehen.

In Fig. 3 sind zwei Eingriffsstellungen A und B für zwei verschiedene Spiralkegelradgetriebe und jeweils eine entsprechende Zahnflanke a und b am Tellerrad 3 dargestellt. Ferner ist der Messring 6 mit dem Schwingungsaufnehmer 7 in den entsprechenden Meßstellungen A1 und B1 ersichtlich. Die Eingriffsstellung A entspricht einem Getriebe ohne Achsversetzung, jedoch mit einem Spiralwinkel von ca. 30°. Senkrecht zur Zahnflanke a wirkt die Zahneingriffskraft P. Befindet sich der Signalaufnehmer gemäss dem Stand der Technik in der Vertikalachse des Zahnrades, so wirkt nur die vertikale Kraftkomponente $P_V$ auf den Signalaufnehmer ein. Erfindungsgemäss kann nun der Justierring 11 und dadurch auch der Messring 6 mit dem Schwingungsaufnehmer 7 nach Lösen der Schraube 13 gegenüber dem Spindelstock 1 um ca. den Spiralwinkel in die neue Stellung A1 gedreht und durch Anziehen der Schraube 13 neu fixiert werden. In dieser Stellung A1 wirkt nun angenähert die maximal mögliche Schwingungskomponente auf den Schwingungsaufnehmer 7 in radialer Richtung. Die Auswertung der gemessenen Schwingungen erfolgt in bekannter Weise über die Geräte 20 und wird nicht näher erläutert.

Die Eingriffsstellug B entspricht einem Getriebe mit zusätzlicher Achsversetzung, auch Hypoidgetriebe genannt. Hier wird die Verminderung der vertikalen Kraftkomponente $P_v$ gegenüber der Zahneingriffskraft P verdeutlicht. Erfindungsgemäss wird nun wiederum der Justierring 11 gedreht, bis der Schwingungsaufnehmer 7 die Stellung B1 erreicht, welche durch die Summe von Spiralwinkel und Achsversetzungswinkel bestimmt wird. Anschliessend wird als Verdrehsicherung der Justierring 11 mit der Schraube 7 fixiert.

Die efindungsgemässe Einrichtung kann sowohl auf der Tellerradspindel wie auch auf der Ritzelspindel zur Anwendung kommen.

## Patentansprüche

1. Schwingungsmesseinrichtung für ein Spiralkegelradgetriebe auf einer Zahnradprüfmaschine, auf welcher die Zahnräder an je einem Spindelstock (1) beziehungsweise der zugeordneten Spindel (2) aufgespannt sind, enthaltend einen Schwingungsaufnehmer (7) und Auswertegeräte (20) zur Qualitätsbeurteilung des Zahnradsatzes, dadurch gekennzeichnet, dass mindestens an einem Spindelstock (1) ein Messring (6) angeordnet ist, welcher den Schwingungsaufnehmer (7) trägt, auf der zugeordneten Spindel (2) drehbar gelagert und zum Spindelstock (1) drehbar und fixierbar ist.

2. Schwingungsmesseinrichtung nach Patentanspruch 1, dadurch gekennzeichnet, dass der Messring (6) über ein verspanntes Lager spielfrei auf der Spindel (2) gelagert ist.

3. Schwingungsmesseinrichtung nach Patentanspruch 2, dadurch gekennzeichnet, dass ein Kugellager (5) und Verspannelemente (17, 18, 19) vorgesehen sind.

4. Schwingungsmesseinrichtung nach Patentanspruch 1, dadurch gekennzeichnet, dass der Messring (6) durch einen Mitnehmer (8) elastisch mit dem Spindelstock (1) verbunden ist.

8. Schwingungsmesseinrichtung nach Patentanspruch 1, dadurch gekennzeichnet, dass als Schwingungsaufnehmer (7) ein piezoelektrischer Wandler vorgesehen ist.

## Claims

1. Apparatus for measuring the vibrations of a spiral bevel gear transmission in a gear-testing machine in which the gear wheels are respectively mounted on a headstock (1), or the associated spindle (2), said apparatus incorporating a vibration recorder (7) and evaluators (20) for making quality judgments about the gear assembly, characterised in that at least on one headstock (1) there is arranged a measuring ring (6) which carries the vibration recorder (7), is rotatably mounted on the associated spindle (2), and can be rotated and immobilised relative to the headstock (1).

2. Apparatus for measuring vibrations according to Claim 1, characterised in that the measuring ring (6) is snugly mounted on the spindle (2) by the agency of a braced bearing.

3. Apparatus for measuring vibrations according to Claim 2, characterised in that a ball bearing (5) and bracing elements (17, 18, 19) are provided.

4. Apparatus for measuring vibrations according to Claim 1, characterised in that the measuring ring (6) is elastically connected to the headstock (1) by a driver (8).

5. Apparatus for measuring vibrations according to Claim 1, characterised by providing a piezoelectric transducer as the vibration recorder (7).

## Revendications

1. Dispositif de mesure de vibrations pour une transmission à pignon conique hélicoïdal sur une machine d'essai d'engrenages, sur laquelle les pignons sont montés sur chacune des poupées (1) ou des broches (2), comprenant un capteur de vibrations (7) et des appareils d'exploitation (20) pour apprécier la qualité des trains d'engrenages, caractérisé en ce qu'au moins sur une poupée (1) est placé un anneau de mesure (6) qui supporte en rotation le capteur de vibrations (7) sur lequel est placée la broche (2) supportée en rotation et qui peut tourner ou être fixée à la poupée (1).

2. Dispositif de mesure de vibrations selon la revendication 1, caractérisé en ce que l'anneau de mesure (6) est supporté par un palier placé sans jeu sur la broche (2).

3. Dispositif de mesure de vibrations selon la revendication 2, caractérisé en ce qu'on prévoit un palier à billes (5) et des éléments de serrage (17, 18, 19).

4. Dispositif de mesure de vibrations selon la revendication 1, caractérisé en ce que l'anneau de mesure (6) est relié élastiquement par un toc d'entraînement (8) à la poupée (1).

5. Dispositif de mesure de vibrations selon la revendication 1, caractérisé en ce qu'on utilise un transducteur piézo-électrique comme capteur de vibrations.

0 192 963

FIG. 1

FIG. 2

FIG. 3

1